# EUROPÄISCHE PATENTSCHRIFT

(11) **EP 2 746 670 B1**
(45) Veröffentlichungstag und Bekanntmachung des Hinweises auf die Patenterteilung: **17.10.2018**
(21) Anmeldenummer: 13005715.1
(22) Anmeldetag: 09.12.2013
(51) Int. Cl.: F24C 7/06, A47J 37/06, F24C 15/16

(54) **Gargerät**
Cooking device
Appareil de cuisson

(30) Priorität: 20.12.2012 DE 102012025412
(43) Veröffentlichungstag der Anmeldung: 25.06.2014
(73) Patentinhaber: Gronbach Forschungs- und Entwicklungs GmbH & Co. KG, 6342 Niederndorf (AT)
(72) Erfinder: Bocks, Stefan, 83112 Frasdorf (DE); Thaller, Stephan, 83564 Soyen (DE); Mösenlechner, Markus, 5700 Zell am See (AT); Kofler, Robert, 6334 Schwoich (AT); Weweck, Alexander, 83134 Prutting (DE); Gronbach, Wilfried, 83549 Eiselfing (DE)
(74) Vertreter: Zinnecker, Armin

(56) Entgegenhaltungen:
- EP-A1- 2 853 820
- US-A- 4 333 521
- US-A1- 2004 177 770
- US-A1- 2010 044 362
- US-A1- 2010 140 251

## Beschreibung

Die Erfindung betrifft ein Gargerät mit einem Gehäuse, in dem eine Schublade längsverschieblich geführt ist, vorzugsweise in horizontaler Richtung. In der Schublade ist eine Grillplatte oder ein sonstiger Gargutträger anbringbar oder angebracht, vorzugsweise in horizontaler Richtung. Das Gargerät, insbesondere dessen Gehäuse, ist insbesondere geeignet zum Einbau in ein Gerät, insbesondere in ein Elektrogerät und/oder in eine Einbauküche. Das Gargerät kann allerdings auch als gesondertes Gerät hergestellt werden.

Ein Gargerät dieser Art ist aus der DE 10 2011 101 042 A1 bekannt. Ferner beschreibt die Schrift US 2010/0140251 A1 eine Vorrichtung zum Aufwärmen tiefgefrorener, in einem Plastikbeutel eingeschweißter Lebensmittel, die mittels Schublade in ein Wärmefach einfahrbar sind. Eine im Schubfach an dessen Oberseite angeordnete Heizplatte kann über Schwenkhebel angehoben und abgesenkt werden, um das Einfahren der Schublade zu ermöglichen. Weitere Gargeräte mit Schubfächern sind aus den Schriften US 4333521 A, EP 2853820 A1, US 2010/ 044362 A1 und US 2004/177770 A1 bekannt.

Aufgabe der Erfindung ist es, ein verbessertes Gargerät der eingangs angegebenen Art vorzuschlagen.

Erfindungsgemäß wird diese Aufgabe durch ein Gargerät mit den Merkmalen des Anspruchs 1 gelöst. In dem Gehäuse ist oberhalb des Gargutträgers eine obere Heizplatte angeordnet. Die obere Heizplatte umfasst vorzugsweise eine Grillplatte, die vorzugsweise an der Unterseite der oberen Heizplatte angeordnet ist. Sie umfasst vorzugsweise einen Hitzeerzeuger, der vorzugsweise an ihrer Oberseite angeordnet ist. Der Hitzeerzeuger kann insbesondere als Heizstrahler, Kochfeldstrahler, Dickschichtheizer oder Rohrheizkörper ausgebildet sein. Er kann insbesondere eine Ceranplatte, Keramikplatte, Steinplatte, ein Waffeleisen oder ein Pfannkucheneisen umfassen. Die obere Heizplatte kann eine Abdeckung für die Grillplatte und/oder für den Hitzeerzeuger aufweisen.

Die obere Heizplatte ist an einem ersten Hebel und an einem zweiten Hebel schwenkbar gelagert. Die Hebel sind vorzugsweise in Bewegungsrichtung der Schublade voneinander beabstandet.

Die anderen Enden der Hebel sind an dem Gehäuse schwenkbar gelagert. Vorzugsweise sind diese anderen Enden oberhalb der oberen Heizplatte an dem Gehäuse schwenkbar gelagert, vorzugsweise an der Deckplatte des Gehäuses. Vorteilhaft ist es, wenn die obere Heizplatte, die Hebel und das Gehäuse, insbesondere dessen Deckplatte ein Viergelenk bilden. Durch die Lagerung an den Hebeln ist die obere Heizplatte in Höhenrichtung bewegbar. Sie kann in Richtung des Gargutträgers bewegt werden. Die obere Heizplatte kann zu dem Gargutträger hin und/oder von diesem weg bewegt werden.

Vorteilhafte Weiterbildungen sind in den Unteransprüchen beschrieben.

Vorteilhaft ist es, wenn ein Hebel ein Langloch aufweist, in dem die obere Heizplatte gelagert ist. Die obere Heizplatte ist vorzugsweise mittels eines Lagerzapfens in dem Langloch gelagert. Vorteilhaft ist es, wenn der Lagerzapfen am unteren Ende des Langlochs aufliegt. Das Langloch ist vorzugsweise gekrümmt ausgestaltet, wobei der Krümmungsradius im Abstand von dem Schwenkpunkt des Hebels an dem Gehäuse entspricht. Das Langloch ist vorzugsweise in dem hinteren Hebel vorgesehen, also in dem Hebel, der in Bewegungsrichtung der Schublade hinten liegt. Dadurch, dass die obere Heizplatte am unteren Ende des Langlochs aufliegt ist es möglich, in dem Gargerät auch Gargut zu garen, das eine größere Höhe aufweist als der Abstand zwischen der oberen Endfläche des Gargutträgers und der unteren Endfläche der oberen Heizplatte. In diesem Fall liegt die obere Heizplatte in der abgesenkten Stellung auf dem Gargut auf.

Das Gargerät weist vorzugsweise einen Motor zum Antrieb eines Hebels auf. Vorzugsweise dient der Motor zum Antrieb des Hebels, der ein Langloch aufweist. Bei dem Motor handelt es sich vorzugsweise um einen Elektromotor. Er ist vorzugsweise mit dem Gehäuse des Gargeräts verbunden. Der Motor kann mit dem Gehäuse des Gargeräts gelenkig verbunden sein.

Vorteilhaft ist es, wenn der Motor eine Schubstange aufweist, die mit dem Hebel verbunden ist. Die Schubstange ist mit dem Hebel vorzugsweise gelenkig verbunden. Es ist allerdings auch möglich, dass die Schubstange mit dem Hebel auf eine andere Weise in Wirkverbindung steht, beispielsweise dadurch, dass die Schubstange an dem Hebel anliegt. Vorteilhaft ist es, wenn der Motor ein Untersetzungsgetriebe und/oder eine Spindel zum Antrieb der Schubstange aufweist.

Nach einer weiteren vorteilhaften Weiterbildung weist der Hebel einen Anschlag auf, der bei abgesenkter oberer Heizplatte an einem Gegenanschlag an dem Gehäuse anliegt. Der Gegenanschlag ist vorzugsweise an der Bodenplatte des Gehäuses vorgesehen. Durch den Anschlag und den Gegenanschlag kann sichergestellt werden, dass die Schublade bei abgesenkter oberer Heizplatte nicht aus dem Gehäuse herausgezogen werden kann.

Nach einer weiteren vorteilhaften Weiterbildung weist das Gargerät eine Bröselwanne auf, die in das Gehäuse einlegbar und aus dem Gehäuse herausnehmbar ist. Vorteilhaft ist es, wenn die Bröselwanne bei geöffneter Schublade in das Gehäuse einlegbar und aus dem Gehäuse herausnehmbar ist. Die Bröselwanne kann auf der Bodenplatte des Gehäuses aufliegen.

Weiterhin weist die Schublade eine untere Heizplatte auf. Die untere Heizplatte umfasst die Grillplatte oder den sonstigen Gargutträger, die oder der an der Oberseite der unteren Heizplatte angeordnet ist, und einen Hitzeerzeuger. Zwischen der Grillplatte und dem Hitzeerzeuger ist eine Abdeckung angeordnet. Die Abdeckung ist vorzugsweise elastisch oder teilelastisch ausgebildet.

Der Hitzeerzeuger kann insbesondere als Heizstrahler, Kochfeldstrahler, Dickschichtheizer oder Rohrheizkörper aufgebildet sein. Er kann insbesondere eine Ceranplatte, Keramikplatte, Steinplatte, ein Waffeleisen oder ein Pfannkucheneisen umfassen.

Vorteilhaft ist es, wenn die Abdeckung als Fasergewebe, Glasfasergewebe, Glasfilament, Kohlefasergewebe, Gewirk, Glasgewirk, Glasmatte oder Glasplatte ausgebildet ist. Die Abdeckung kann mit einem Drahtgitter ausgeführt sein. Sie kann allerdings auch ohne Drahtgitter ausgeführt sein.

Die Abdeckung kann als Schutz für die untere Heizplatte, insbesondere als Schutz für einen Kochfeldstrahler dienen, insbesondere für dessen Heizwiderstände. Sie kann insbesondere als Schutz gegen Verschmutzung dienen, beispielsweise durch Brösel des Garguts. Die Abdeckung kann an ihren Rändern befestigt, insbesondere verklebt sein. Sie kann unter Spannung befestigt sein. Vorteilhaft ist es, wenn die Abdeckung wärmedurchlässig und/oder strahlungsdurchlässig ist. Die Abdeckung kann auf einfache Weise gereinigt werden, beispielsweise durch Saugen. Vorteilhaft ist es, wenn die Abdeckung unempfindlich gegen Bruch ist. Die Abdeckung kann insbesondere derart ausgestaltet sein, dass eine Konvektion durch sie hindurch möglich ist.

Ein Ausführungsbeispiel der Erfindung wird nachstehen anhand der beigefügten Zeichnung im Einzelnen erläutert. In der Zeichnung zeigt
- Fig. 1: ein Gargerät mit herausgezogener Schublade in einer perspektivischen Ansicht,
- Fig. 2: das Gargerät gemäß Fig. 1 in einer Ansicht von oben,
- Fig. 3: das Gargerät gemäß Fig. 1 und 2 in einer Seitenansicht,
- Fig. 4: das Gargerät gemäß Fig. 1 bis 3 mit vollständig eingeschobener Schublade in einer der Fig. 3 entsprechenden Seitenansicht,
- Fig. 5: das Gargerät in einer der Fig. 4 entsprechenden Seitenansicht mit abgesenkter oberer Heizplatte,
- Fig. 6: das Gargerät gemäß Fig. 1 bis 5 mit herausgezogener Schublade in einer Seitenansicht ohne den Motor,
- Fig. 7: das Gargerät in einer der Fig. 6 entsprechenden Seitenansicht mit vollständig eingeschobener Schublade,
- Fig. 8: das Gargerät in einer der Fig. 7 entsprechenden Seitenansicht mit abgesenkter oberer Heizplatte,
- Fig. 9: das Gargerät gemäß Fig. 1 bis 8 mit vollständig eingeschobener Schublade in einer perspektivischen Ansicht, wobei Gehäuseteile und der Motor weggelassen sind,
- Fig. 10: das Gargerät in einer der Fig. 9 entsprechenden perspektivischen Ansicht mit abgesenkter oberer Heizplatte,
- Fig. 11: das Gargerät gemäß Fig. 1 bis 10 in einer der Fig. 1 entsprechenden Darstellung mit herausgenommener Bröselwanne und
- Fig. 12: das Gargerät in einer der Fig. 11 entsprechenden perspektivischen Darstellung mit teilweise eingelegter Bröselwanne.

Das in der Zeichnung dargestellte Gargerät umfasst ein Gehäuse 1, in dem eine Schublade 2 längsverschieblich geführt ist. Das Gehäuse 1 umfasst eine Deckplatte 3, eine linke Seitenplatte 4, eine rechte Seitenplatte 5, eine Rückwand 6 und eine Bodenplatte 7.

Die Schublade 2 umfasst eine Front 8, eine untere Heizplatte 9 und eine Bodenwand 10.

In dem Gehäuse 1 ist oberhalb der unteren Heizplatte 9 eine obere Heizplatte 11 angeordnet. Die obere Heizplatte 11 umfasst eine Grillplatte 12, die an ihrer Unterseite angeordnet ist, einen Hitzeerzeuger 13, der als Heizstrahler ausgebildet ist und der an der Oberseite der oberen Heizplatte 11 angeordnet ist, und eine Abdeckung 14 für den Heizstrahler, die zwischen der Grillplatte 12 und dem Hitzeerzeuger 13 angeordnet ist. Die Grillplatte 12 ist als Platte mit quer verlaufenden Vertiefungen an ihrer Unterseite ausgestaltet. Sie ist an der oberen Heizplatte 11 lösbar befestigbar und kann insbesondere zu Reinigungszwecken abgenommen und danach wieder angebracht werden.

Die obere Heizplatte 11 ist an einen ersten Hebel 15 und an einem zweiten Hebel 16 schwenkbar gelagert. Ein Ende des ersten Hebels 15 ist an der oberen Heizplatte 11 schwenkbar gelagert. Das andere Ende des ersten Hebels 15 ist an der Deckplatte 3 des Gehäuses 1 um eine Achse 17 schwenkbar gelagert.

Der zweite Hebel 16 umfasst einen Hebelarm 18, in dem ein Langloch 19 vorhanden ist. In dem Langloch 19 befindet sich ein Lagerzapfen 20. Der Lagerzapfen 20 ist mit der oberen Heizplatte 11 verbunden. Er liegt am unteren Ende des Langlochs 19 auf.

Das dem Langloch 19 abgewandte Ende des Hebelarms 18 ist an dem Gehäuse 1 um eine Achse 21 schwenkbar gelagert. Die Achse 21 befindet sich an einer Abkantung, die an der Deckplatte 3 des Gehäuses 1 befestigt ist.

Das Langloch 19 ist gekrümmt ausgestaltet. Es beschreibt einen Radius um die Achse 21.

Der erste Hebel 15 befindet sich in Bewegungsrichtung der Schublade 2 vorne, der zweite Hebel 16 befindet sich in Bewegungsrichtung der Schublade 2 hinten. Die Hebel 15, 16 verlaufen jeweils von vorne unten nach hinten oben. Sie bilden ein Viergelenk.

Der zweite Hebel 16 wird durch einen Motor 22, nämlich einen Elektromotor angetrieben. Er ist um eine Achse 23 an dem Gehäuse 1 schwenkbar gelagert. Die Achse 23 befindet sich an einer Abkantung, die mit der Deckplatte 3 des Gehäuses 1 verbunden ist. Der Motor 22 umfasst ein Untersetzungsgetriebe und eine Spindel, die eine Schubstange 24 antreibt. Das Ende der Schubstange 24 ist mit einem zweiten Hebelarm 25 des zweiten Hebels 16 um eine Achse 26 gelenkig verbunden. Der zweite Hebelarm 25 ist mit dem Hebelarm 18 fest verbunden. Die Achse 26 liegt unterhalb der Achse 21.

Der zweite Hebel 16 weist ferner einen dritten Hebelarm 27 auf, an dessen Ende ein Anschlag 28 vorgesehen ist. Der dritte Hebelarm 27 ist fest mit dem Hebelarm 18 und dem zweiten Hebelarm 25 verbunden. Er weist von der Achse 21 schräg nach unten und vorne.

Die untere Heizplatte 9 umfasst eine Grillplatte 29, die an ihrer Oberseite angeordnet ist, und einen Hitzeerzeuger 30, der als Heizstrahler ausgebildet ist und der an der Unterseite der unteren Heizplatte 9 angeordnet ist. Zwischen der Grillplatte 29 und dem Hitzeerzeuger 30 ist eine Abdeckung 31 angeordnet.

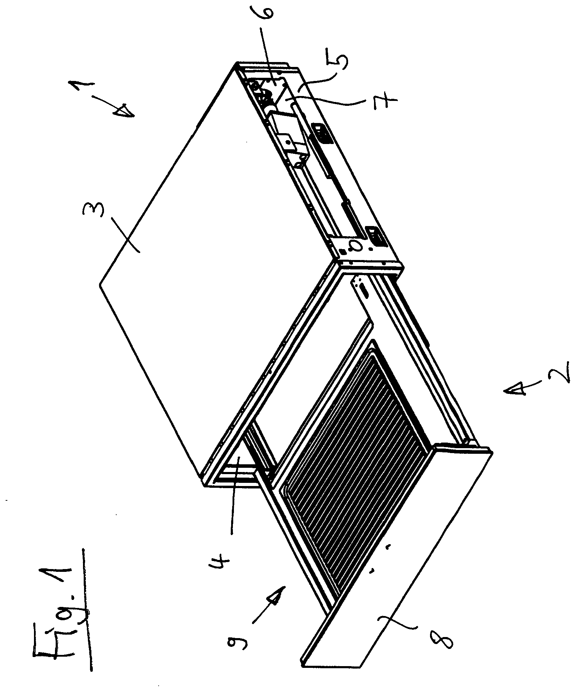

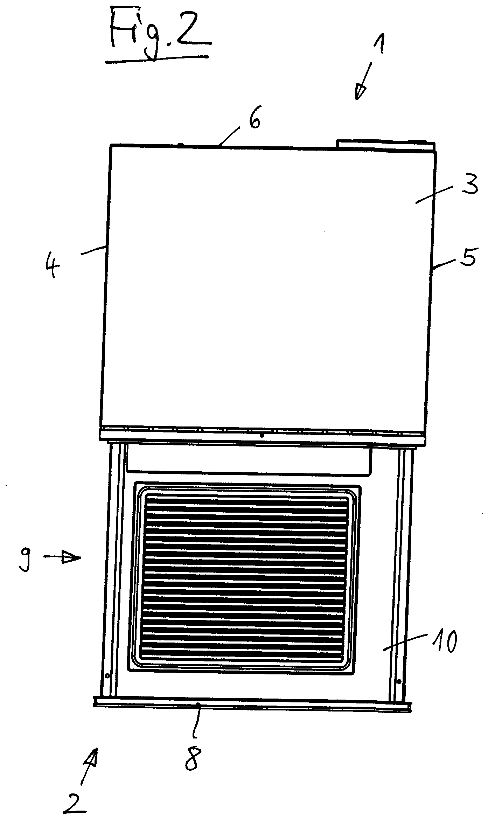

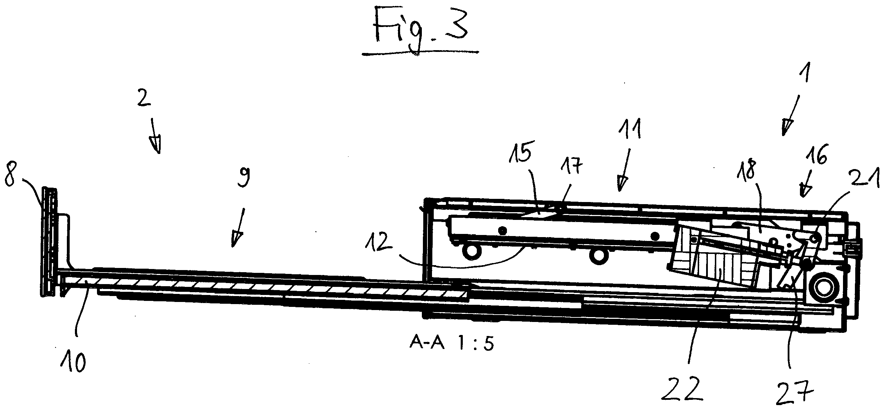

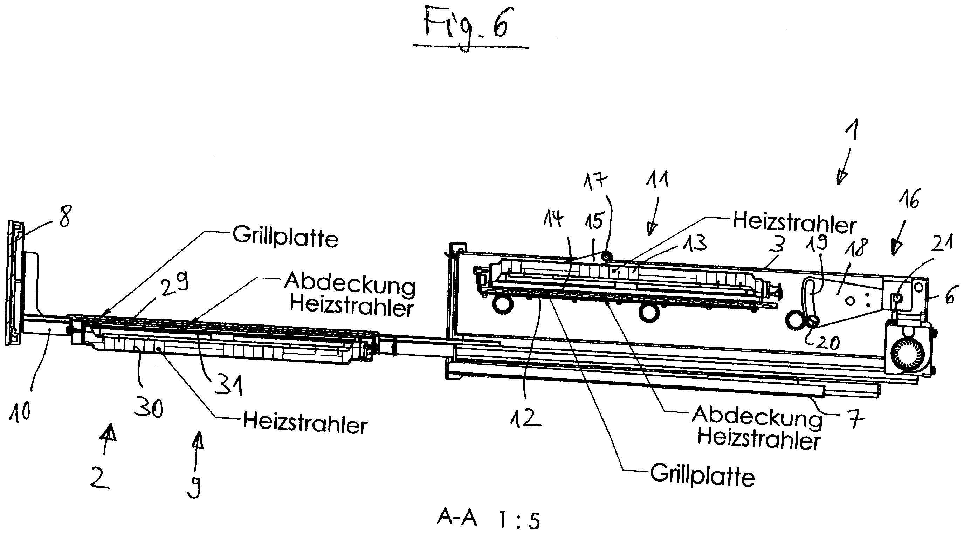

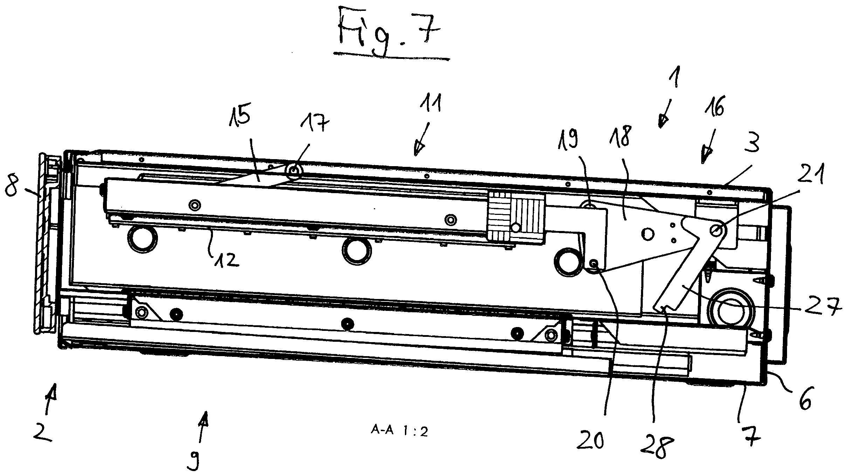

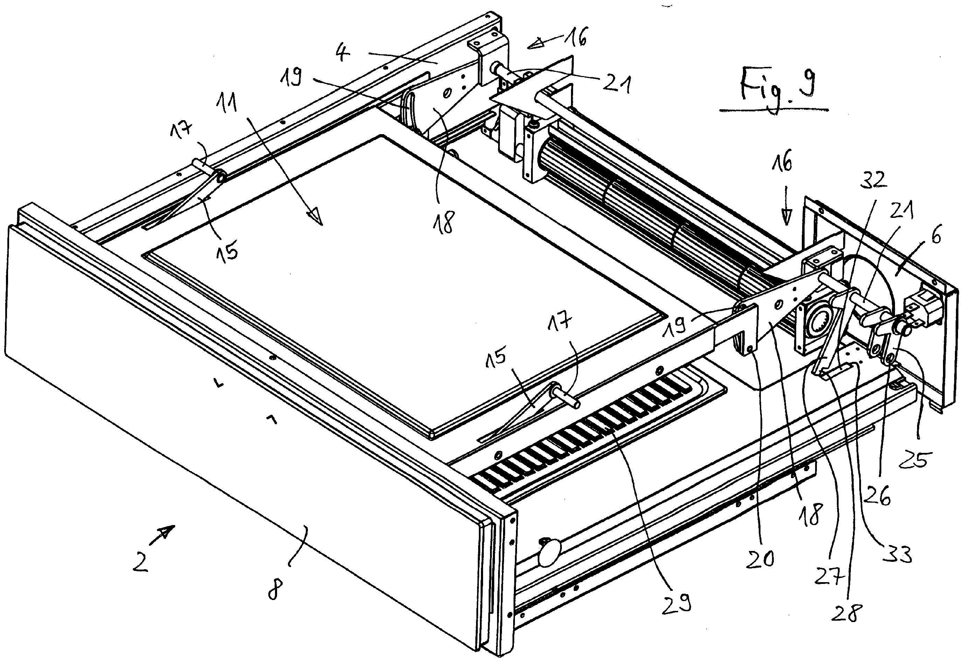

Im Betrieb befindet sich die Schublade 2 zunächst im herausgezogenen Zustand, der in Fig. 1, 2, 3, 6, 11 und 12 gezeigt ist. In diesem Zustand kann das Gargut auf die Grillplatte 29 aufgelegt werden. Anschließend wird die Schublade 2 in das Gehäuse 1 eingeschoben. Dabei befindet sich die obere Heizplatte 11 in der angehobenen Stellung gemäß Fig. 3, 6, 7 und 9.

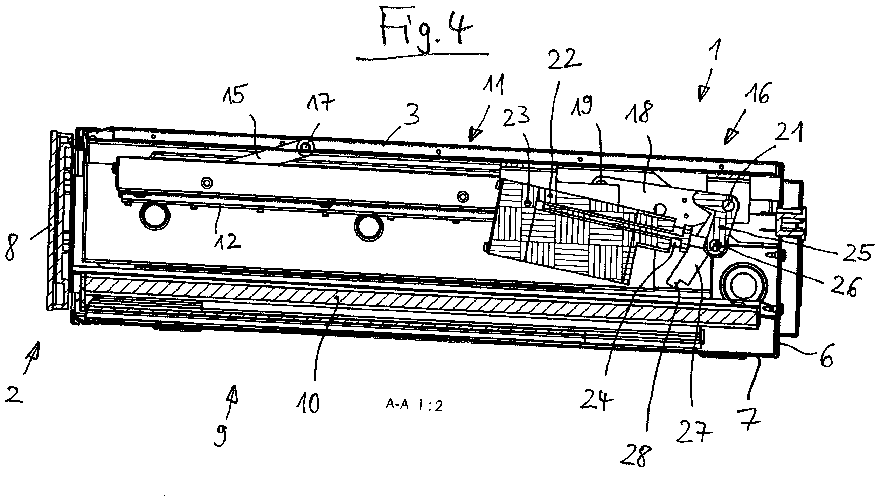

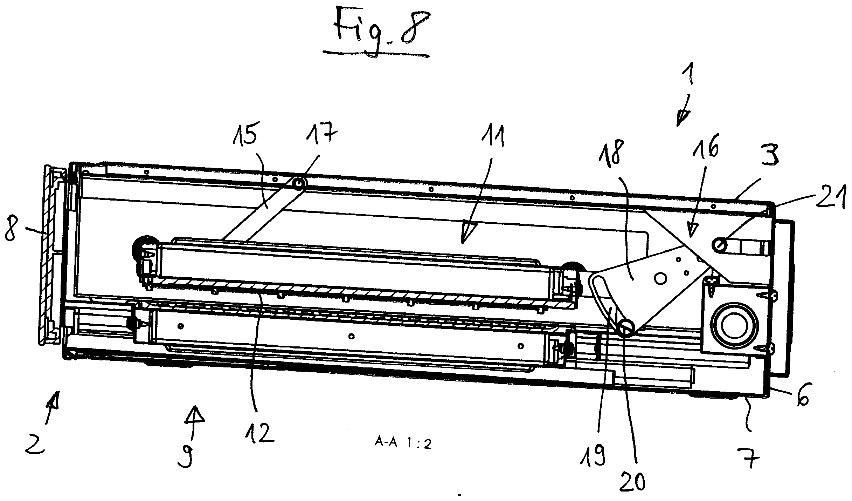

Fig. 4, 5, 7, 8, 9 und 10 zeigen die Endstellung, in der die Schublade 2 vollständig in das Gehäuse 1 eingeschoben ist. In dieser Stellung liegt die Front 8 der Schublade 2 an der Vorderseite des Gehäuses 1 an.

In dieser Stellung kann der Motor 22 betätigt werden, um die obere Heizplatte 11 abzusenken. Dabei bewegt sich die Schubstange 24 nach außen, nämlich nach hinten. Sie verschwenkt den zweiten Hebelarm 25 des zweiten Hebels 16 um die Achse 21 in einer Richtung entgegen dem Uhrzeigersinn. Hierdurch wird auch der Hebelarm 18 entgegen dem Uhrzeigersinn bewegt. Dadurch wird das hintere Ende der oberen Heizplatte 11, das mit dem Lagerzapfen 20 am unteren Ende des Langlochs 19 aufliegt, nach unten bewegt. Gleichzeitig wird der erste Hebel 15 um die Achse 17 in einer Richtung entgegen dem Uhrzeigersinn verschwenkt. Die obere Heizplatte 11 bleibt während der Absenkbewegung parallel zur Deckplatte 3 des Gehäuses 1 in horizontaler Richtung.

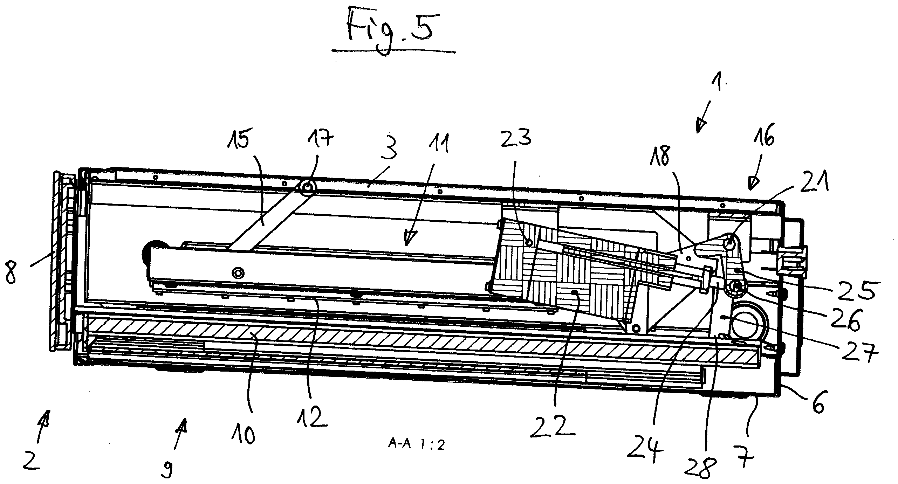

Die obere Heizplatte 11 kann bis in ihre untere Endstellung abgesenkt werden, die in Fig. 5, 8 und 10 gezeigt ist. Sie befindet sich dann in einem geringen Abstand über der Grillplatte 29 der unteren Heizplatte 9.

Wenn sich auf der Grillplatte 29 ein Gargut befindet, dessen Höhe größer ist als dieser Abstand, liegt die Grillplatte 12 der oberen Heizplatte 11 bereits dann auf dem Gargut auf, bevor der Hebelarm 18 des zweiten Hebels 16 seine untere Endstellung erreicht hat. Wenn dann der Hebelarm 18 weiterhin um die Achse 21 entgegen dem Uhrzeigersinn verschwenkt wird, bewegt sich der Lagerzapfen 20 in dem Langloch 19 nach oben. Hierdurch ist gewährleistet, dass der Motor 22 den Hebelarm 18 vollständig in dessen untere Endstellung bewegen kann, ohne dass dadurch Beschädigungen des Motors oder der sonstigen beweglichen Teile entstehen können.

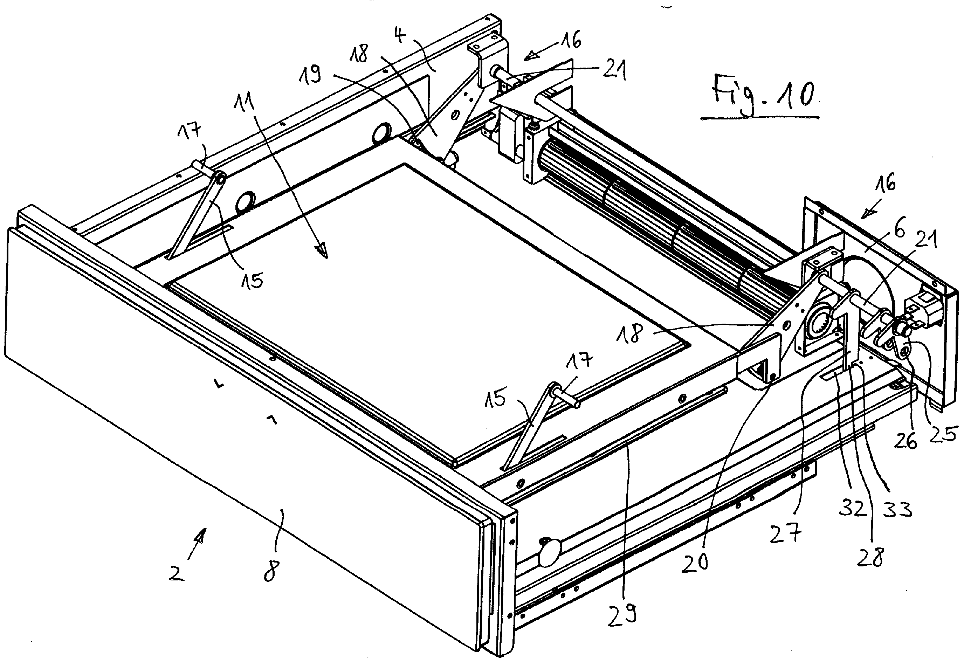

In der Bodenplatte 7 des Gehäuses 1 ist eine Aussparung 32 vorhanden. Während der Verschwenkung des zweiten Hebels 16 um die Achse 21 nach unten bewegt sich das Ende des dritten Hebelarms 27 in diese Aussparung 32 hinein, wie in Fig. 10 gezeigt, bis das stufenförmige hintere Ende des dritten Hebelarms 27, das den Anschlag 28 bildet, an der hinteren Endkante der Aussparung 32 anliegt. Diese hintere Endkante bildet einen Gegenanschlag 33 für den Anschlag 28, der verhindert, dass die Schublade 2 bei abgesenkter oberer Heizplatte 11 aus dem Gehäuse 1 herausgezogen werden kann.

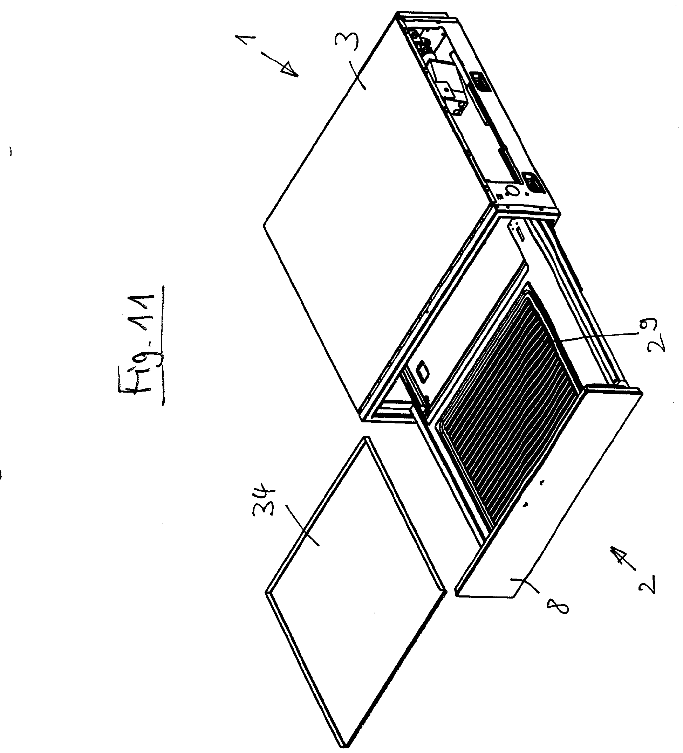

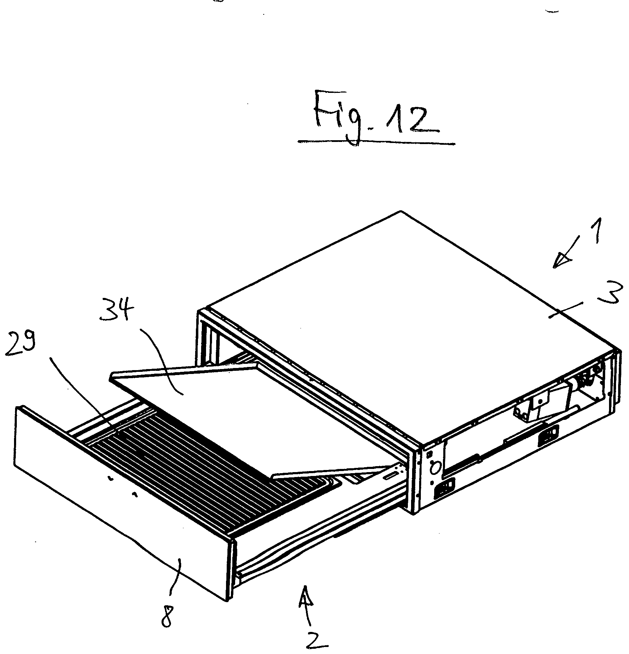

Fig. 11 zeigt das Gargerät mit einer Bröselwanne 34, die aus dem Gargerät herausgenommen ist. Sie kann bei herausgezogener Schublade 2 in das Gehäuse 1 des Gargeräts eingesetzt werden, wie in Fig. 12 gezeigt. Hierzu wird die Bröselwanne 34 in eine schräge Lage gebracht und durch die vordere Öffnung des Gehäuses 1 eingeführt. Sie kann dann auf die Bodenplatte 7 des Gehäuses 1 aufgelegt werden.

Die Grillplatten 12, 29 sind mit den Heizplatten 9, 11 nicht fest, sondern lösbar verbunden.

Durch die Erfindung wird ein Kontaktgrill geschaffen, der in einer Schublade längsverschieblich gelagert ist. Das Gargut befindet sich an seiner Unterseite im Kontakt mit dem Gargutträger. Es kann sich mit seiner Oberseite im Kontakt mit der Grillplatte 12 befinden. Allerdings ist es auch möglich, dass die Grillplatte 12 oberhalb des,Gargutes nicht im Kontakt mit dem Gargut steht und dieses nur von oben mit Wärmestrahlung bestrahlt. Die Grillplatten 12, 29 können aus verschiedenen Werkstoffen hergestellt sein, beispielsweise aus Aluminium, vorzugsweise mit einer Antihaftbeschichtung aus beispielsweise Teflon oder Keramik. Die Heizungen für die Grillplatten 12, 29 können als Rohrheizkörper ausgebildet sein und elektrisch oder mit Gas beheizt werden. Es kann allerdings auch eine induktive Heizung und/oder ein Strahlungsheizkörper vorgesehen sein, der vorzugsweise elektrisch betrieben wird. Vorteilhaft ist es, wenn eine schnelle Aufheizung gewährleistet ist. Dies kann insbesondere durch eine geringe Masse der Grillplatten 12, 29 erreicht werden. Als Material ist Aluminium besonders geeignet. Vorteilhaft ist es, wenn innerhalb von vier Minuten eine Aufheizung auf 200°C erreicht werden kann.

## Patentansprüche

1. Gargerät mit einem Gehäuse (1), in dem eine Schublade (2) längsverschieblich geführt ist, in der eine Grillplatte (29) oder ein sonstiger Gargutträger angebracht ist, wobei in dem Gehäuse (1) oberhalb des Gargutträgers eine obere Heizplatte (11) an einen ersten Hebel (15) und an einem zweiten Hebel (16) schwenkbar gelagert ist, deren andere Enden an dem Gehäuse (1) schwenkbar (17, 21) gelagert sind,
**dadurch gekennzeichnet,**
**dass** die Schublade (2) eine untere Heizplatte (9) aufweist, die die Grillplatte (29) oder den sonstigen Gargutträger und einen Hitzeerzeuger (30) umfasst, wobei zwischen der Grillplatte (29) oder dem sonstigen Gargutträger einerseits und dem Hitzeerzeuger (30) andererseits eine Abdeckung (31) angeordnet ist.

2. Gargerät nach Anspruch 1, **dadurch gekennzeichnet, dass** ein Hebel (16) ein Langloch (19) aufweist, in dem die obere Heizplatte (11) gelagert ist.

3. Gargerät nach Anspruch 1 oder 2, **gekennzeichnet durch** einen Motor (22) zum Antrieb eines Hebels (16).

4. Gargerät nach Anspruch 3, **dadurch gekennzeichnet, dass** der Motor (22) eine Schubstange (24) aufweist, die mit dem Hebel (16) verbunden ist.

5. Gargerät nach einem der vorhergehenden Ansprüche, **dadurch gekennzeichnet, dass** ein Hebel (16) einen Anschlag (28) aufweist, der bei abgesenkter oberer Heizplatte (11) an einem Gegenanschlag (33) an dem Gehäuse (1) anliegt.

6. Gargerät nach einem der vorhergehenden Ansprüche, **gekennzeichnet durch** eine Bröselwanne (34), die in das Gehäuse (1) einlegbar und aus dem Gehäuse (1) herausnehmbar ist.

7. Gargerät nach einem der vorhergehenden Ansprüche, **dadurch gekennzeichnet, dass** die Abdeckung (31) elastisch oder teilelastisch ist.

8. Gargerät nach Anspruch 7, **dadurch gekennzeichnet, dass** die Abdeckung als Fasergewebe, Glasfasergewebe, Glasfilament, Kohlefasergewebe, Gewirk, Glasgewirk, Glasmatte oder Glasplatte ausgebildet ist.

## Claims

1. Cooking appliance with a housing (1), in which a drawer (2) is guided in a longitudinally displaceable manner, in which a grill plate (29), or another cooking product support is attached, wherein, in the housing (1) above the cooking product support, an upper hot plate (11) is pivotably mounted on a first lever (15) and on a second lever (16), the other ends of which are pivotably (17, 21) mounted on the housing (1),
**characterized in that**
the drawer (2) comprises a lower hot plate (9), which includes the grill plate (29) or the other cooking product support and a heat generator (30), wherein, between the grill plate (29) or the other cooking product support, on the one side, and the heat generator (30) on the other side, a cover (31) is arranged.

2. Cooking appliance according to claim 1, **characterized in that** a lever (16) comprises a slot (19), in which the upper hot plate (11) is mounted.

3. Cooking appliance according to claims 1 or 2, **characterized by** a motor (22) for driving a lever (16).

4. Cooking appliance according to claim 3, **characterized in that** the motor (22) comprises a push rod (24), which is connected with the lever (16).

5. Cooking appliance according to one of the preceding claims, **characterized in that** a lever (16) comprises a stop (28), which, in a lowered upper hot plate (11), abuts on a counter-stop (33) on the housing (1).

6. Cooking appliance according to one of the preceding claims, **characterized by** a breadcrumb tray (34), which is insertable into, and withdrawable from the housing (1).

7. Cooking appliance according to one of the preceding claims, **characterized in that** the cover (31) is elastic, or partially elastic.

8. Cooking appliance according to claim 7, **characterized in that** the cover is designed as a fibrous fabric, glass fiber fabric, glass filament, carbon fiber fabric, knitted fabric, knitted glass fabric, glass mat, or glass plate.

## Revendications

1. Appareil de cuisson avec un boîtier (1) dans lequel un tiroir (2) est guidée de manière déplaçable longitudinalement, dans lequel une plaque de gril (29) ou un autre support d'aliments à cuire est attachée, une plaque de cuisson supérieure (11) étant monté de manière à pouvoir pivoter dans le boîtier (1), au-dessus du support d'aliments à cuire, sur un premier levier (15) et sur un deuxième levier (16) dont les autres extrémités sont montées de manière à pouvoir pivoter (17, 21) sur le boîtier (1),
**caractérisé en ce que**
le tiroir (2) comporte une plaque de cuisson (9) inférieure qui comprend la plaque de grill (29) ou l'autre support d'aliments à cuire et un générateur de chaleur (30), un recouvrement (31) étant disposé, d'un part entre la plaque de grill (29) ou l'autre support d'aliments à cuire et d'autre part le générateur de chaleur (30).

2. Appareil de cuisson selon la revendication 1, **caractérisé en ce qu'**un levier (16) comporte un trou oblong (19) dans lequel la plaque de cuisson (11) supérieure est montée.

3. Appareil de cuisson selon la revendication 1 ou 2, **caractérisé par** un moteur (22) pour entraîner un levier (16).

4. Appareil de cuisson selon la revendication 3, **caractérisé en ce que** le moteur (22) comporte une biellette (24) qui est reliée au levier (16).

5. Appareil de cuisson selon l'une quelconque des revendications précédentes, **caractérisé en ce qu'**un levier (16) comporte une butée (28) qui se repose contre une contre-butée (33) sur le boîtier lorsque la plaque de cuisson (11) supérieure est abaissée.

6. Appareil de cuisson selon l'une quelconque des revendications précédentes, **caractérisé par** un bac à miettes (34) qui peut être inséré dans le boîtier (1) et retiré du boîtier (1).

7. Appareil de cuisson selon l'une quelconque des revendications précédentes, **caractérisé en ce que** le couvercle (31) est élastique ou partiellement élastique.

8. Appareil de cuisson selon la revendication 7, **caractérisé en ce que** le couvercle est réalisé sous forme de tissu en fibres, de tissu de fibres de verre, de filaments de verre textile, de tissu de fibres de carbone, de tricot, de tricot de verre, de mat en verre ou de plaque en verre.
